# EUROPEAN PATENT APPLICATION

(11) **EP 4 813 514 A1**
(43) Date of publication of application: **30.09.2026**
(21) Application number: 25745422.3
(22) Date of filing: 08.01.2025
(51) Int. Cl.: B01J 27/24, B01J 37/08, C01B 3/04

(54) **CATALYST FOR AMMONIA DECOMPOSITION REACTION WITH IMPROVED CATALYST STABILITY AND HYDROGEN PRODUCTION METHOD USING SAME**

(30) Priority: 23.01.2024 KR 20240009997
(71) Applicant: Korea Research Institute of Chemical Technology, Daejeon 34114 (KR)
(72) Inventor: CHAE, Ho Jeong, Daejeon 34114 (KR); KIM, Young Min, Daejeon 34114 (KR); IM, Young Hwan, Daejeon 34114 (KR)
(74) Representative: Isarpatent
(86) International application number: PCT/KR2025/000364
(87) International publication number: WO 2025/159402

(57) **Abstract**

The present invention relates to a catalyst for an ammonia decomposition reaction and a hydrogen production method using same. More specifically, the present invention relates to: a catalyst for an ammonia decomposition reaction which, by containing cesium and cerium in a cobalt-molybdenum composite nitride, exhibits excellent catalytic activity in the ammonia decomposition reaction and thus enables an improved ammonia conversion rate, and which shows minimal degradation in activity even after high-temperature and long-duration reactions, offering excellent long-term stability; and a hydrogen production method using the catalyst.

## Description

### Technical Field

The present disclosure relates to a catalyst for an ammonia decomposition reaction and a method of producing hydrogen using the same. More specifically, the present disclosure relates to a catalyst for an ammonia decomposition reaction with improved catalyst stability, the catalyst being capable of improving ammonia conversion rate in the ammonia decomposition reaction and exhibiting long-term stability by suppressing catalyst deactivation, and to a method of producing hydrogen using the catalyst.

### Background Art

Recently, climate change has intensified, and hydrogen energy has gained global attention as an environmentally friendly alternative to fossil fuels. For the practical use of hydrogen energy, it is important to develop technologies for the safe and efficient storage and transport of hydrogen. Although there are numerous ways to store hydrogen, there are expectations for methods that use hydrogen storage materials capable of reversibly storing and releasing hydrogen as a hydrogen storage medium installed in fuel cell vehicles.

One method of efficiently storing and transporting hydrogen involves using ammonia as a hydrogen storage and supply source. Because the decomposition of ammonia into hydrogen and nitrogen is an endothermic process, energy is required to obtain the products. Existing catalytic decomposition reactions require substantial heat to obtain effective amounts of hydrogen gas and, accordingly, hydrogen production in this manner is costly.

2NH₃ → 3H₂ + N₂ (endothermic reaction) (1)

A catalyst for an ammonia decomposition reaction is a catalyst that decomposes ammonia into nitrogen and hydrogen. Conventionally, when attempts were made to obtain high-purity hydrogen using ammonia decomposition catalysts proposed to date, either the conversion rate was low, or catalysts with increased reaction activity to improve the conversion rate tended to exhibit an excessive decrease in catalytic activity over the course of the reaction time.

Under such circumstances, the present disclosure aims to propose a novel ammonia decomposition catalyst exhibiting a high ammonia conversion rate to nitrogen and hydrogen while exhibiting high stability at the same time.

First, in the related art, European Patent Application Publication No. 2612706, which relates to an ammonia oxidation/decomposition catalyst, more specifically proposes a technology regarding a catalyst capable of reducing the hydrogen production cost by utilizing heat generated from an ammonia oxidation reaction in an ammonia decomposition reaction, wherein the catalyst includes ruthenium, a noble metal, as a catalytically active component and lanthanum oxide and/or cerium oxide as a catalyst support.

In addition, Japanese Patent Application Publication No. 2011-224556, which relates to an ammonia decomposition catalyst, a method of preparing the catalyst, and a method of producing hydrogen using the catalyst, more specifically proposes a technology regarding a catalyst capable of efficiently decomposing ammonia into hydrogen and nitrogen while exhibiting high activity in an ammonia decomposition reaction, wherein the catalyst includes a Group 8 metal including ruthenium as a catalyst component and lanthanum oxide and/or cerium oxide as a catalyst support component.

However, these catalysts are noble metal catalysts based on ruthenium or the like and have limitations when applied to large-scale processes due to their rarity and high cost.

Accordingly, while studying non-noble-metal-based catalysts for ammonia decomposition reactions, the inventors of the present disclosure confirmed that a catalyst for an ammonia decomposition reaction, the catalyst including a novel form of a composite nitride containing cerium and cesium in a cobalt-molybdenum composite nitride, exhibited superior catalytic activity compared to existing catalysts while also exhibiting activity even after a prolonged period of time, that is, long-term stability, thereby completing the present disclosure.

### [Documents of related art]

### [Patent Documents]

(Patent Document 1) European Patent Application Publication No. 2612706 (Publication date: July 10, 2013)
(Patent Document 2) Japanese Patent Application Publication No. 2011-224556 (Publication date: November 10, 2011)

### Disclosure

### Technical Problem

The present disclosure, which has been proposed to address the aforementioned problems, primarily aims to provide a catalyst for an ammonia decomposition reaction, the catalyst being capable of maintaining long-term activity while exhibiting high activity in the ammonia decomposition reaction, and a method of producing hydrogen using the same.

### Technical Solution

To accomplish the above objective, an embodiment of the present disclosure provides a catalyst for an ammonia decomposition reaction with improved catalyst stability, the catalyst being characterized by containing cesium and cerium in a cobalt-molybdenum composite nitride.

In a preferred embodiment of the present disclosure, the catalyst may be characterized in that cesium is contained in an amount in a range of 0.001 mol to 0.05 mol with respect to 1 mol of the cobalt-molybdenum composite nitride.

In a preferred embodiment of the present disclosure, the catalyst may be characterized in that cerium is contained in an amount in a range of 0.01 mol to 0.4 mol with respect to 1 mol of the cobalt-molybdenum composite nitride.

In a preferred embodiment of the present disclosure, the catalyst may be characterized in that the cobalt-molybdenum composite nitride contains cobalt in an amount in a range of 0.5 mol to 1.5 mol with respect to 1 mol of molybdenum.

Another embodiment of the present disclosure provides a method of preparing a catalyst for an ammonia decomposition reaction with improved catalyst stability, the method being characterized by including the following steps: (a) mixing a cobalt precursor, a molybdenum precursor, a cesium precursor, and a cerium precursor; (b) drying the resulting mixture of Step (a); and (c) nitriding the dried mixture of Step (b) using a nitrogen source, thereby preparing a cobalt-molybdenum composite nitride containing cesium and cerium.

In another preferred embodiment of the present disclosure, the method may be characterized in that the method, after Step (a), includes a step of aging the resulting mixture of Step (a).

In another preferred embodiment of the present disclosure, the method may be characterized in that the aging is performed at a temperature in a range of 25°C to 100°C for 0.1 hours to 10 hours.

In another preferred embodiment of the present disclosure, the method may be characterized in that Step (b) further includes a step of performing calcination after the drying.

In another preferred embodiment of the present disclosure, the method may be characterized in that, in the calcination, primary calcination is performed at a temperature in a range of 100°C to 400°C, followed by secondary calcination at a temperature in a range of 400°C to 700°C.

In another preferred embodiment of the present disclosure, the method may be characterized in that solvent-deficient milling is used in Step (a) to mix the cobalt precursor, the molybdenum precursor, the cesium precursor, and the cerium precursor.

In another preferred embodiment of the present disclosure, the method may be characterized in that the nitriding in Step (c) is performed at a temperature in a range of 600°C to 800°C.

In another preferred embodiment of the present disclosure, the method may be characterized in that the nitrogen source includes one or more selected from the group consisting of ammonia, sodium cyanide, potassium cyanide, urea, and melamine.

A further embodiment of the present disclosure provides a method of producing hydrogen from ammonia, the method being characterized by bringing a cobalt-molybdenum composite nitride containing cesium and cerium into contact with a gas containing ammonia to cause an ammonia decomposition reaction.

In a further preferred embodiment of the present disclosure, the method may be characterized in that the cobalt-molybdenum composite nitride containing cesium and cerium is brought into contact with ammonia at a temperature in a range of 300°C to 600°C.

### Advantageous Effects

A catalyst for an ammonia decomposition reaction according to the present disclosure can exhibit excellent catalytic activity in the ammonia decomposition reaction by containing cesium and cerium in a cobalt-molybdenum composite nitride. In addition, by suppressing catalyst deactivation even after high-temperature and long-duration reactions, the catalyst can exhibit minimal degradation in activity, thus offering excellent long-term stability.

In addition, a method of preparing a catalyst for an ammonia decomposition reaction according to the present disclosure can reduce the time and cost required for solvent drying by minimizing the use of a solvent, and facilitate the mass production of the catalyst. In addition, the catalyst can be prepared using solvent-deficient milling capable of minimizing catalyst performance degradation, thereby enabling mass production on a commercial scale without degradation in catalytic activity.

### Description of Drawings

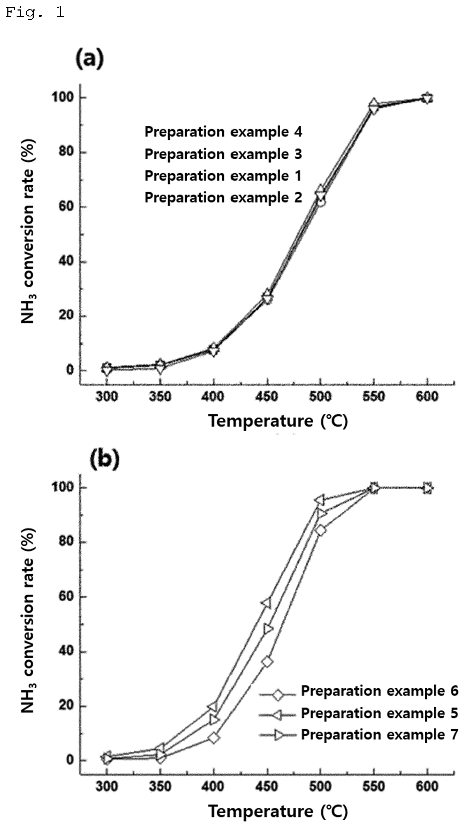

FIG. 1 shows graphs of ammonia conversion rate measurement results of catalysts prepared in Preparation Examples 1 to 7 according to the present disclosure, wherein FIG. 1(a) is a graph showing ammonia conversion rate measurement results of catalysts prepared in Preparation Examples 1 to 4, and FIG. 1(b) is a graph showing ammonia conversion rate measurement results of catalysts prepared in Preparation Examples 5 to 7.

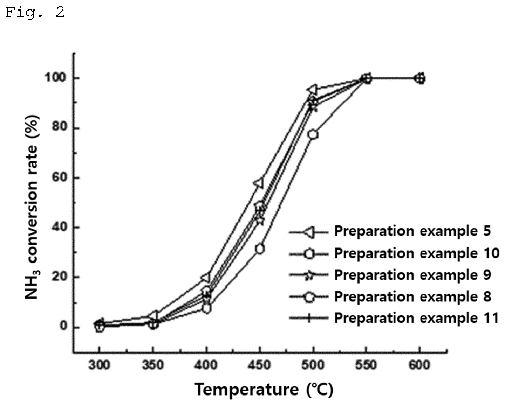

FIG. 2 is a graph showing ammonia conversion rate measurement results of catalysts prepared in Preparation Examples 5 and 8 to 11 according to the present disclosure.

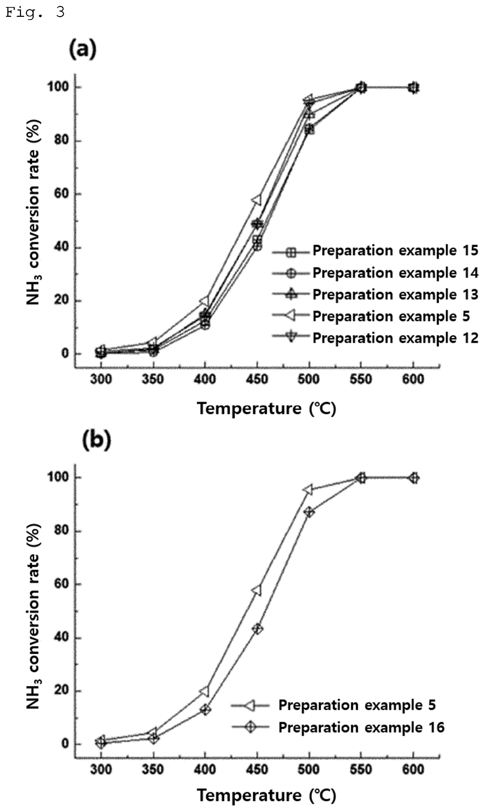

FIG. 3 shows graphs of ammonia conversion rate measurement results of catalysts prepared in Preparation Examples 5 and 12 to 16 according to the present disclosure, wherein FIG. 3(a) is a graph showing ammonia conversion rate measurement results of catalysts prepared in Preparation Examples 5 and 12 to 15, and FIG. 3(b) is a graph showing ammonia conversion rate measurement results of catalysts prepared in Preparation Examples 5 and 16.

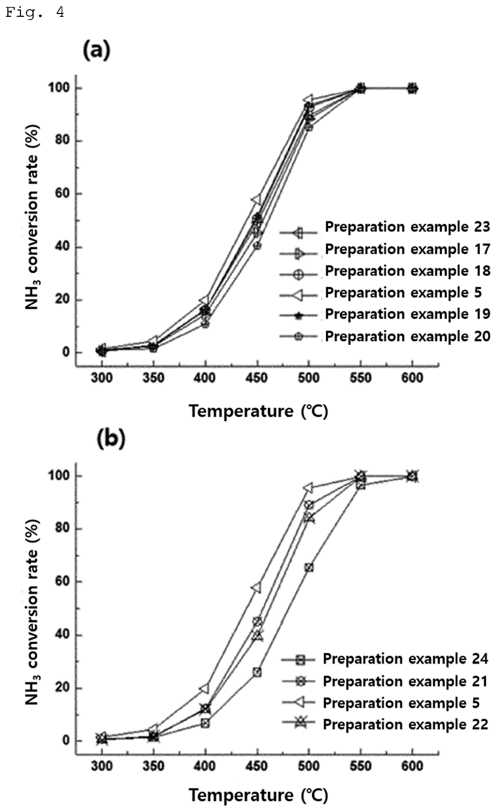

FIG. 4 shows graphs of ammonia conversion rate measurement results of catalysts prepared in Preparation Examples 5 and 17 to 24 according to the present disclosure, wherein FIG. 4(a) is a graph showing ammonia conversion rate measurement results of catalysts prepared in Preparation Examples 5, 17 to 20, and 23, and FIG. 4(b) is a graph showing ammonia conversion rate measurement results of catalysts prepared in Preparation Examples 5 and 21 to 24.

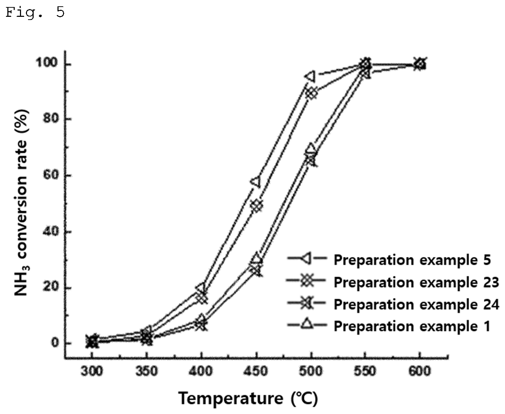

FIG. 5 is a graph showing ammonia conversion rate measurement results of catalysts prepared in Preparation Examples 1, 5, 23, and 24 according to the present disclosure.

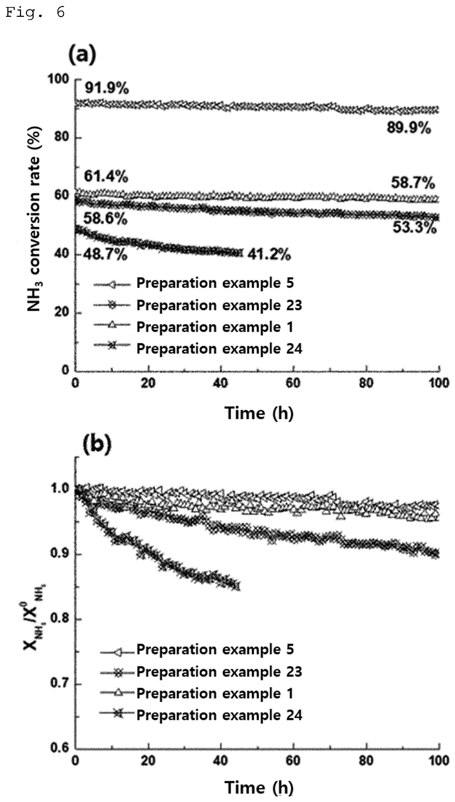

FIG. 6 shows graphs of long-term stability measurement results of catalysts prepared in Preparation Examples 1, 5, 23, and 24 according to the present disclosure, wherein FIG. 6(a) is a graph showing ammonia conversion rates over reaction time, and FIG. 6 (b) is a graph showing X_{NH3}/X⁰_{NH3} measurements over reaction time.

### Mode for Invention

Unless defined otherwise, all terms including technical and scientific terms used herein have the same meaning as commonly understood by those skilled in the art to which the present disclosure belongs. Generally, the nomenclature used herein is well-known and commonly used in the art.

As stated herein, the terms such as "comprising", "including", or "having" are intended to specify the presence of features, integers, steps, operations, components, parts, or combinations thereof stated herein, but do not exclude the possibility that other unmentioned features, integers, steps, operations, components, parts, or combinations thereof may be present or added.

Unless otherwise specified, the reaction and mixing to be described below may be carried out under conventional reaction and mixing conditions, typically at room temperature and atmospheric pressure, without additional modifications. However, the interpretation of the present disclosure should not extend beyond what is clearly understood by those skilled in the art.

An aspect of the present disclosure provides a catalyst for an ammonia decomposition reaction with improved catalyst stability, the catalyst being characterized by containing cesium and cerium in a cobalt-molybdenum composite nitride.

Hereafter, the catalyst for an ammonia decomposition reaction according to the present disclosure will be described in detail.

The catalyst for an ammonia decomposition reaction according to the present disclosure, which is a catalyst characterized by containing cesium and cerium in a cobalt-molybdenum composite nitride, is used for ammonia decomposition reactions. Thus, this catalyst is characterized by being cost-effective compared to conventional noble metal catalysts, exhibiting excellent ammonia decomposition reaction efficiency compared to existing non-metal catalysts, and exhibiting long-term stability by suppressing catalyst deactivation over reaction time, even at high temperatures and after a prolonged period of time.

In the catalyst for an ammonia decomposition reaction according to the present disclosure, the cobalt-molybdenum composite nitride, which is a nitride containing cobalt and molybdenum, may contain cobalt in an amount in the range of 0.5 mol to 1.5 mol, preferably in the range of 0.8 mol to 1.2 mol, with respect to 1 mol of molybdenum. In the cobalt-molybdenum composite nitride, when the contents of cobalt and molybdenum fall within the aforementioned ranges, the greatest amount of the cobalt-molybdenum composite nitride may be formed.

In addition, cesium may be contained in the cobalt-molybdenum composite nitride in an amount in the range of 0.001 mol to 0.05 mol, preferably in the range of 0.004 mol to 0.015 mol, with respect to 1 mol of the cobalt-molybdenum composite nitride.

When cesium is contained in an amount of less than 0.001 mol with respect to 1 mol of the cobalt-molybdenum composite nitride, the effect of the co-catalyst may be insufficient due to the small amount of cesium added, which is problematic. When cesium is contained in an amount exceeding 0.05 mol with respect to 1 mol of the cobalt-molybdenum composite nitride, excessive cesium may cover the catalyst surface, thereby causing problems with the exposure level of the active material and the blockage of the pores of the catalyst.

In addition, cerium contained in the cobalt-molybdenum composite nitride may perform a positive role in activity and thermal stability as a co-catalyst, and may be contained in an amount in the range of 0.01 mol to 0.4 mol, preferably in the range of 0.05 mol to 0.20 mol, with respect to 1 mol of the cobalt-molybdenum composite nitride.

When cerium is contained in an amount of less than 0.001 mol with respect to 1 mol of the cobalt-molybdenum composite nitride, the effect of the co-catalyst may be insufficient due to the small amount of cerium added, which is problematic. When cerium is contained in an amount exceeding 0.4 mol with respect to 1 mol of the cobalt-molybdenum composite nitride, excessive cesium may cover the catalyst surface, thereby causing problems with the exposure level of the active material and the blockage of the pores of the catalyst.

In addition, another aspect of the present disclosure provides a method of preparing a catalyst for an ammonia decomposition reaction with improved catalyst stability, the method being characterized by including the following steps: (a) mixing a cobalt precursor, a molybdenum precursor, a cesium precursor, and a cerium precursor; (b) drying the resulting mixture of Step (a); and (c) nitriding the dried mixture of Step (b) using a nitrogen source, thereby preparing a cobalt-molybdenum composite nitride containing cesium and cerium.

Hereinafter, the method of preparing the catalyst for an ammonia decomposition reaction according to the present disclosure will be described in detail for each step.

Step (a) involves obtaining a mixture by mixing a cobalt precursor, a molybdenum precursor, a cesium precursor, and a cerium precursor.

This step involves uniformly mixing the cobalt precursor, the molybdenum precursor, the cesium precursor, and the cerium precursor. Specifically, the cobalt precursor, the molybdenum precursor, the cesium precursor, and the cerium precursor may be mixed using solvent-deficient milling or may be dissolved in a solvent, thereby obtaining a mixture in which the cobalt precursor, the molybdenum precursor, the cesium precursor, and the cerium precursor are mixed.

In one embodiment, the solvent-deficient milling is a mixing method using no solvent or a small amount of solvent. The solvent-deficient milling may, for example, be performed using a mixing apparatus such as a ball mill using chemically inert beads, a planetary mill, a stirred ball mill, or a vibrating mill. In this case, in order to maximize the mixing effect, a solvent capable of dissolving the precursors, such as water, methanol, or ethanol, may be selectively added in a small amount.

In one embodiment, when the precursors are mixed using the solvent-deficient milling according to the present disclosure, milling may be performed at a rotational speed in the range of 100 rpm to 1000 rpm for 6 hours to 72 hours.

The mixing of the cobalt precursor, the molybdenum precursor, the cesium precursor, and the cerium precursor using the solvent-deficient milling, described above, may reduce costs associated with solvent removal required in subsequent processes by minimizing the use of a solvent, and may provide effects of facilitating the mass production of the catalyst while minimizing catalyst performance degradation.

In the meantime, in another embodiment, the mixing of the cobalt precursor, the molybdenum precursor, the cesium precursor, and the cerium precursor in a solvent may be performed by individually adding the respective precursors in required amounts to separate solvents and mixing the resulting solutions to obtain a mixture, or by adding the measured cobalt precursor, molybdenum precursor, cesium precursor, and cerium precursor together into a single solvent to obtain a mixture in which the cobalt precursor, the molybdenum precursor, the cesium precursor, and the cerium precursor are mixed. In this case, the solvent is not particularly limited as long as it is capable of dissolving the precursors, and is preferably water.

The cobalt precursor, the molybdenum precursor, the cesium precursor, and the cerium precursor may each independently be one or more selected from the group consisting of inorganic compounds and organic compounds containing the respective metal element or ion (cobalt, molybdenum, cesium, and cerium). Specifically, each precursor may be a chloride, hydrate, nitride, acetylacetonate, iodide, or the like of the corresponding metal. In a preferred embodiment, the precursor may be in the form of a nitride or hydrate, but is not limited thereto.

As specific examples, the cobalt precursor may be cobalt nitrate [Co(NO₃)₂], cobalt nitrate hydrate [Co(NO₃)₂·xH₂O], cobalt chloride (CoCl₂), or the like, and the molybdenum precursor may be ammonium molybdate [(NH₄)₂MoO₄], ammonium molybdate hydrate [(NH₄)₆Mo₇O₂₄·4H₂O], sodium molybdate (Na₂MoO₄), or the like.

In addition, as specific examples, the cesium precursor may be cesium nitrate (CsNO₃), cesium chloride (CsCl), or the like, and the cerium precursor may be cerium nitrate [Ce(NO₃)₃], cerium nitrate hydrate [Ce(NO₃)₃·xH₂O], or the like.

Thereafter, the method may include a step of aging the resulting mixture obtained in Step (a) before the drying step to be described later so that catalyst composition and crystallization may be effectively achieved.

The aging may be performed using various mixers and stirrers to achieve uniform mixing, and may be performed at a temperature in the range of 25°C to 100°C, preferably in the range of 70°C to 90°C, for 0.1 hours to 10 hours.

When the aging temperature is lower than 25°C, a CoMoOₓ compound, which is a primary component of the catalyst, is not smoothly formed due to slow mixing and nucleation rates, which is problematic. When the aging temperature exceeds 100°C, the catalytic activity may decrease because the nucleation rate increases, thereby causing particles of the CoMoOₓ compound to become large, which is problematic. In addition, when the aging time is less than 0.1 hours, there may be a problem in that the CoMoOₓ compound is formed insufficiently due to the short aging time. When the aging time exceeds 10 hours, although smooth formation of the CoMoOₓ compound may be expected, there may be unnecessary problems with cost effectiveness in the catalyst preparation step due to the prolonged aging time.

Next, Step (b) involves drying the aforementioned mixture. The drying may be performed at a temperature in the range of 25°C to 150°C, preferably in the range of 90°C to 120°C, after evaporating the solvent from the mixture. When the drying temperature is 90°C or higher, effective drying may be achieved, and when the drying temperature is 120°C or lower, costs may be relatively reduced. In addition, the drying time is preferably adjusted within 24 hours based on the drying state of the mixture, but may exceed 24 hours if necessary.

Thereafter, the dried mixture may be further subjected to calcination in an oxidizing atmosphere such as air or an oxygen-containing mixed gas at a temperature in the range of 200°C to 800°C, preferably in the range of 350°C to 600°C. When the calcination temperature is 200°C or higher, impurities may be sufficiently removed, thereby improving ammonia decomposition efficiency, and by maintaining the calcination temperature at 800°C or lower, the possibility of catalyst performance degradation, which is a problem resulting from sintering, may be reduced. In addition, since the calcination time may vary depending on the calcination amount, the calcination apparatus, and the like, it may be difficult to quantitatively define the calcination time. Accordingly, the completion time of the calcination is preferably determined based on the state of the calcined product. Nevertheless, if the calcination time is to be limited, the calcination may be performed for 30 hours or less.

In addition, the calcination may be performed within the aforementioned temperature range, but the calcination step may be divided into primary calcination and secondary calcination in order to prevent abrupt shrinkage and structural changes of various composite oxides (cesium, cerium, cobalt, and molybdenum). In this case, the primary calcination may be performed at a temperature in the range of 100°C to 400°C, and the secondary calcination may be performed at a temperature in the range of 400°C to 700°C after the primary calcination.

When the calcination is performed in separate temperature ranges within the aforementioned temperature range, abrupt shrinkage of the composite oxide, which occurs as impurities present in the mixture are rapidly released therefrom due to abrupt temperature changes, may be prevented. Accordingly, such calcination is preferable for increasing and maintaining the specific surface area of the catalyst.

Subsequently, Step (c) involves nitriding the dried mixture of Step (b) in order to maximize the ammonia decomposition reaction activity of cobalt and molybdenum, which are the primary active components of the mixture dried in Step (b). The nitriding may be performed in the presence of a nitrogen source at a temperature in the range of 300°C to 800°C, preferably in the range of 600°C to 750°C, for 0.1 hours to 8 hours.

When the nitriding is performed at a temperature lower than 300°C, a sufficient nitriding effect may not be expected. When the nitriding is performed at a temperature exceeding 800°C, aggregation of the catalyst material may reduce the specific surface area, leading to a problem with reduced efficiency of the ammonia decomposition reaction. In addition, since the nitriding time may vary depending on the amount of reactants and the like, it may be difficult to quantitatively define the nitriding time. Accordingly, the nitriding time is preferably determined based on the state of the resulting nitride. Nevertheless, if the calcination time is to be limited, the calcination may be performed for 1 hour to 4 hours.

In this case, the nitrogen source used in the nitriding is not particularly limited as long as it is a nitrogen atom-containing compound commonly used in the art. For example, the nitrogen source may be ammonia, urea, melamine, or the like.

In a further aspect, the present disclosure provides a method of producing hydrogen from ammonia using the aforementioned catalyst for an ammonia decomposition reaction.

Specifically, in the method of producing hydrogen according to the present disclosure, hydrogen may be produced by bringing a cobalt-molybdenum composite nitride containing cesium and cerium, that is, the aforementioned catalyst for an ammonia decomposition reaction, into contact with a gas containing ammonia to cause an ammonia decomposition reaction.

The gas containing ammonia is not particularly limited, but may be not only ammonia gas or an ammonia-containing gas, but also a gas containing a substance that generates ammonia by thermal decomposition, such as urea.

In addition, the gas containing ammonia may contain other components as long as they do not act as catalyst poisons. The reaction temperature is preferably in the range of 300°C to 600°C. The reaction pressure may be an absolute pressure in the range of 0.002 MPa to 2 MPa, more preferably in the range of 0.004 MPa to 1 MPa.

The catalyst for an ammonia decomposition reaction may exhibit an ammonia conversion rate of 50% or more at a temperature in the range of 450°C to 550°C and, specifically, may exhibit an ammonia conversion rate of 80% or more at a temperature in the range of 500°C to 550°C.

Hereinafter, the present disclosure will be described in more detail through the following specific examples. The following examples are provided only to help the understanding of the present disclosure, and the scope of the present disclosure is not limited thereto.

### <Preparation Example 1: CoMoOₓ-N Catalyst>

In 100 mL of deionized water, 2.5 g of Co(NO₃)₂·6H₂O and 1.51 g of (NH₄)₆Mo₇O₂₄·4H₂O were dissolved, thereby obtaining a uniform mixture. Then, the obtained mixture was aged while being stirred at 80°C for 1 hour. Moisture was evaporated from the aged mixture using a rotary evaporator, followed by drying at 100°C for 20 hours. Thereafter, the dried mixture was subjected to primary calcination at 350°C for 15 hours and then to secondary calcination at 600°C for 5 hours. The calcined product was nitrided at 700°C for 3 hours under ammonia gas to prepare a CoMoOₓ-N catalyst. In this case, the subscript in the designation of the CoMoOₓ-N catalyst represents the mole of the corresponding component.

### <Preparation Examples 2 to 4: CoMoOₓ-N Catalysts>

Each CoMoOₓ-N catalyst was prepared in the same manner as in Preparation Example 1, except that the aging time was changed as shown in Table 1.

### <Preparation Example 5: Cs_{0.007}Ce_{0.1}-CoMoOₓ-N Catalyst>

According to the preparation method of Preparation Example 5, 2.5 g of Co(NO₃)₂·6H₂O, 1.51 g of (NH₄)₆Mo₇O₂₄·4H₂O, 0.38 g of Ce(NO₃)₃·6H₂O, and 0.011 g of CsNO₃ were dissolved in 100 mL of deionized water, thereby obtaining a uniform mixture. Then, the obtained mixture was aged while being stirred at 80°C for 3 hours. Moisture was evaporated from the aged mixture using a rotary evaporator, followed by drying at 100°C for 20 hours. Thereafter, the dried mixture was subjected to primary calcination at 350°C for 15 hours and then to secondary calcination at 600°C for 5 hours. The calcined product was nitrided at 700°C for 3 hours under ammonia gas to prepare a Cs_{0.007}Ce_{0.1}-CoMoOₓ-N catalyst. In this case, the subscript in the designation of the Cs_{0.007}Ce_{0.1}-CoMoOₓ-N catalyst represents the mole of the corresponding component.

### <Preparation Examples 6 to 10: Cs_{0.007}Ce_{0.1}-CoMoOₓ-N Catalysts>

Each Cs_{0.007}Ce_{0.1}-CoMoOₓ-N catalyst was prepared in the same manner as in Preparation Example 5, except that the preparation conditions were changed as shown in Table 1 below.

### <Preparation Example 11: Cs_{0.007}Ce_{0.1}-CoMoOₓ-N Catalyst>

A Cs_{0.007}Ce_{0.1}-CoMoOₓ-N catalyst was prepared in the same manner as in Preparation Example 5, except that the calcination step was omitted, and only the nitriding step was performed after drying at 100°C for 20 hours.

### <Preparation Examples 12 to 16: Cs_{0.007}Ce_{0.1}-CoMoOₓ-N Catalysts>

Each Cs_{0.007}Ce_{0.1}-CoMoOₓ-N catalyst was prepared in the same manner as in Preparation Example 5, except that the preparation conditions were changed as shown in Table 1 below.

**[Table 1]**

| Classificatio n | Aging step | | Calcination step | | Nitriding step | |
|---|---|---|---|---|---|---|
| | Temp (°C) | Tim e (hr ) | Primary calcinatio n temperatur e (°C) | Secondary calcinatio n temperatur e (°C) | Temp (°C) | Tim e (hr ) |
| Preparation Example 1 | 80 | 1 | 350 | 600 | 700 | 3 |
| Preparation Example 2 | 80 | 3 | 350 | 600 | 700 | 3 |
| Preparation Example 3 | 80 | 6 | 350 | 600 | 700 | 3 |
| Preparation Example 4 | 80 | 10 | 350 | 600 | 700 | 3 |
| Preparation Example 5 | 80 | 3 | 350 | 600 | 700 | 3 |
| Preparation Example 6 | 70 | 3 | 350 | 600 | 700 | 3 |
| Preparation Example 7 | 90 | 3 | 350 | 600 | 700 | 3 |
| Preparation Example 8 | 80 | 3 | - | 600 | 700 | 3 |
| Preparation Example 9 | 80 | 3 | - | 500 | 700 | 3 |
| Preparation Example 10 | 80 | 3 | - | 350 | 700 | 3 |
| Preparation Example 11 | 80 | 3 | - | - | 700 | 3 |
| Preparation Example 12 | 80 | 3 | 350 | 600 | 700 | 4 |
| Preparation Example 13 | 80 | 3 | 350 | 600 | 700 | 2 |
| Preparation Example 14 | 80 | 3 | 350 | 600 | 700 | 1 |
| Preparation Example 15 | 80 | 3 | 350 | 600 | - | - |
| Preparation Example 16 | 80 | 3 | 350 | 600 | 750 | 3 |

### <Preparation Example 17: Cs_{0.007}Ce_{0.01}-CoMoOₓ-N Catalyst>

A Cs_{0.007}Ce_{0.01}-CoMoOₓ-N catalyst was prepared in the same manner as in Preparation Example 5, except that 0.037 g of Ce(NO₃)₃·6H₂O was used instead of 0.38 g of Ce(NO₃)₃·6H₂O during mixing. In this case, the subscript in the designation of the Cs_{0.007}Ce_{0.01}-CoMoOₓ-N catalyst represents the mole of the corresponding component.

### <Preparation Example 18: Cs_{0.007}Ce_{0.05}-CoMoOₓ-N Catalyst>

A Cs_{0.007}Ce_{0.05}-CoMoOₓ-N catalyst was prepared in the same manner as in Preparation Example 5, except that 0.186 g of Ce(NO₃)₃·6H₂O was used instead of 0.38 g of Ce(NO₃)₃·6H₂O during mixing. In this case, the subscript in the designation of the Cs_{0.007}Ce_{0.05}-CoMoOₓ-N catalyst represents the mole of the corresponding component.

### <Preparation Example 19: Cs_{0.007}Ce_{0.20}-CoMoOₓ-N Catalyst>

A Cs_{0.007}Ce_{0.20}-CoMoOₓ-N catalyst was prepared in the same manner as in Preparation Example 5, except that 0.745 g of Ce(NO₃)₃·6H₂O was used instead of 0.38 g of Ce(NO₃)₃·6H₂O during mixing. In this case, the subscript in the designation of the Cs_{0.007}Ce_{0.20}-CoMoOₓ-N catalyst represents the mole of the corresponding component.

### <Preparation Example 20: Cs_{0.007}Ce_{0.50}-CoMoOₓ-N Catalyst>

A Cs_{0.007}Ce_{0.50}-CoMoOₓ-N catalyst was prepared in the same manner as in Preparation Example 5, except that 1.86 g of Ce(NO₃)₃·6H₂O was used instead of 0.38 g of Ce(NO₃)₃·6H₂O during mixing. In this case, the subscript in the designation of the Cs_{0.007}Ce_{0.50}-CoMoOₓ-N catalyst represents the mole of the corresponding component.

### <Preparation Example 21: Cs_{0.004}Ce_{0.10}-CoMoOₓ-N Catalyst>

A Cs_{0.004}Ce_{0.10}-CoMoOₓ-N catalyst was prepared in the same manner as in Preparation Example 5, except that 0.006 g of CsNO₃ was used instead of 0.011 g of CsNO₃ during mixing. In this case, the subscript in the designation of the Cs_{0.004}Ce_{0.50}-COMoOₓ-N catalyst represents the mole of the corresponding component.

### <Preparation Example 22: Cs_{0.015}Ce_{0.10}-CoMoOₓ-N Catalyst>

A Cs_{0.015}Ce_{0.10}-CoMoOₓ-N catalyst was prepared in the same manner as in Preparation Example 5, except that 0.023 g of CsNO₃ was used instead of 0.011 g of CsNO₃ during mixing. In this case, the subscript in the designation of the Cs_{0.015}Ce_{0.10}-CoMoOₓ-N catalyst represents the mole of the corresponding component.

### <Preparation Example 23: Cs_{0.007}-CoMoOₓ-N Catalyst>

A Cs_{0.007}-CoMoOₓ-N catalyst was prepared in the same manner as in Preparation Example 5, except that the cerium precursor was not added during preparation. In this case, the subscript in the designation of the Cs_{0.007}-CoMoOₓ-N catalyst represents the mole of the corresponding component.

### <Preparation Example 24: Ce_{0.10}-CoMoOₓ-N Catalyst>

A Ce_{0.10}-CoMoOₓ-N catalyst was prepared in the same manner as in Preparation Example 5, except that the cesium precursor was not added during preparation. In this case, the subscript in the designation of the Ce_{0.10}-CoMoOₓ-N catalyst represents the mole of the corresponding component.

### <Preparation Example 25: Cs_{0.007}Ce_{0.1}-CoMoOₓ-N Catalyst>

In 200 mL of deionized water, 14.85 g of Co(NO₃)₂·6H₂O, 8.83 g of (NH₄)₆Mo₇O₂₄·4H₂O, 2.19 g of Ce (NO₃)₃·6H₂O, and 0.069 g of CsNO₃ were dissolved, thereby obtaining a uniform mixture. Then, the obtained mixture was aged while being stirred at 80°C for 3 hours. Moisture was evaporated from the aged mixture using a rotary evaporator, followed by drying at 100°C for 20 hours. Thereafter, the dried mixture was subjected to primary calcination at 350°C for 15 hours and then to secondary calcination at 600°C for 5 hours. The calcined product was nitrided at 700°C for 3 hours under ammonia gas to prepare a Cs_{0.007}Ce_{0.1}-CoMoOₓ-N catalyst. In this case, the subscript in the designation of the Cs_{0.007}Ce_{0.1}-CoMoOₓ-N catalyst represents the mole of the corresponding component.

### <Preparation Example 26: Cs_{0.007}Ce_{0.1}-CoMoOₓ-N Catalyst>

In 300 mL of deionized water, 29.70 g of Co(NO₃)₂·6H₂O, 17.66 g of (NH₄)₆Mo₇O₂₄·4H₂O, 4.39 g of Ce (NO₃)₃·6H₂O, and 0.1378 g of CsNO₃ were dissolved, thereby obtaining a uniform mixture. Then, the obtained mixture was aged while being stirred at 80°C for 3 hours. Moisture was evaporated from the aged mixture using a rotary evaporator, followed by drying at 100°C for 20 hours. Thereafter, the dried mixture was subjected to primary calcination at 350°C for 15 hours and then to secondary calcination at 600°C for 5 hours. The calcined product was nitrided at 700°C for 3 hours under ammonia gas to prepare a Cs_{0.007}Ce_{0.1}-CoMoOₓ-N catalyst. In this case, the subscript in the designation of the Cs_{0.007}Ce_{0.1}-CoMoOₓ-N catalyst represents the mole of the corresponding component.

### <Preparation Example 27: Cs_{0.007}Ce_{0.1}-CoMoOₓ-N Catalyst>

In 10 mL of deionized water, 14.85 g of Co(NO₃)₂·6H₂O, 8.83 g of (NH₄)₆Mo₇O₂₄·4H₂O, 2.19 g of Ce(NO₃)₃·6H₂O, and 0.0689 g of CsNO₃ were dissolved, thereby obtaining a uniform mixture. Then, the obtained mixture was introduced into a ball milling device (LM-BS750, LK LABKOREA), followed by ball milling at a rotational speed of 350 rpm for 24 hours. The ball-milled mixture was dried under vacuum at 150°C for 24 hours, and the dried mixture was then subjected to calcination at 600°C for 5 hours. The calcined product was nitrided at 700°C for 3 hours under ammonia gas to prepare a Cs_{0.007}Ce_{0.1}-CoMoOₓ-N catalyst. In this case, the subscript in the designation of the Cs_{0.007}Ce_{0.1}-CoMoOₓ-N catalyst represents the mole of the corresponding component.

### <Preparation Example 28: Cs_{0.007}Ce_{0.1}-CoMoOₓ-N Catalyst>

In 20 mL of deionized water, 29.70 g of Co(NO₃)₂·6H₂O, 17.66 g of (NH₄)₆Mo₇O₂₄·4H₂O, 4.39 g of Ce(NO₃)₃·6H₂O, and 0.1378 g of CsNO₃ were dissolved, thereby obtaining a uniform mixture. Then, the obtained mixture was introduced into a ball milling device (LM-BS750, LK LABKOREA), followed by ball milling at a rotational speed of 350 rpm for 24 hours. The ball-milled mixture was dried under vacuum at 150°C for 24 hours, and the dried mixture was then subjected to calcination at 600°C for 5 hours. The calcined product was nitrided at 700°C for 3 hours under ammonia gas to prepare a Cs_{0.007}Ce_{0.1}-CoMoOₓ-N catalyst. In this case, the subscript in the designation of the Cs_{0.007}Ce_{0.1}-CoMoOₓ-N catalyst represents the mole of the corresponding component.

### <Experimental Example 1: Measurement of Ammonia Decomposition Reaction According to Aging Conditions of Catalysts>

In order to measure the effect of aging time on the ammonia decomposition reaction, the catalysts prepared in Preparation Examples were used as catalysts for an ammonia decomposition reaction, followed by measuring the ammonia conversion rate in the ammonia decomposition reaction. The results thereof are shown in FIG. 1.

In FIG. 1, FIG. 1(a) is a graph showing ammonia conversion rate measurements at varying ammonia decomposition reaction temperatures as a function of aging time, and FIG. 1(b) is a graph showing ammonia conversion rate measurements at varying ammonia decomposition reaction temperatures as a function of aging temperature.

In this case, the ammonia decomposition reaction was measured at atmospheric pressure in a quartz fixed-bed continuous-flow tubular reactor equipped with a thermocouple. A quartz wool layer was provided inside the reactor, and 0.1 g of each catalyst sample prepared in Preparation Examples was loaded thereon, after which pure NH₃ (30 mL/min), corresponding to a gas hourly space velocity (GHSV) of 6,000 mL/g_{cat}./h, was introduced into the reactor.

The catalytic activity was evaluated at temperatures in the range of 300°C to 600°C in increments of 50°C (60 minutes at each temperature). The concentration of the outlet gas was monitored using online gas chromatography (YL6500GC, YL Instrument Co., Korea) equipped with a thermal conductivity detector (TCD) and Porapak-N and Molesieve 13X columns. The ammonia conversion rate X_{NH3} (%) was calculated according to Equation 1. In Equation 1 below, (NH₃)ᵢₙ denotes the ammonia concentration introduced into the reactor, and (NH₃)ₒᵤₜ denotes the ammonia concentration discharged from the reactor.
${X}_{NH 3} \left(%\right) = \left\{\left[{\left({NH}_{3}\right)}_{in}-{\left({NH}_{3}\right)}_{out}\right]/{\left({NH}_{3}\right)}_{in}\right\} \times 100$

As shown in FIG. 1, there was no significant difference in ammonia conversion rate as a function of aging time. However, in terms of aging temperature, the catalysts of Preparation Examples 5 and 7, aged at 80°C and 90°C, respectively, exhibited higher ammonia activity than the catalyst of Preparation Example 6.

### <Experimental Example 2: Measurement of Ammonia Decomposition Reaction According to Calcination Conditions of Catalysts>

In order to measure the effect of calcination conditions on the ammonia decomposition reaction, the catalysts prepared in Preparation Examples were used as catalysts for an ammonia decomposition reaction, followed by measuring the ammonia conversion rate in the ammonia decomposition reaction. The results thereof are shown in FIG. 2. In this case, the ammonia conversion rate in the ammonia decomposition reaction was measured in the same manner as in Experimental Example 1. The results thereof are shown in FIG. 2.

As shown in FIG. 2, the catalyst of Preparation Example 5, prepared through the primary calcination and secondary calcination, exhibited higher ammonia activity than the catalysts of Preparation Examples 8 to 11, prepared through calcination at a single temperature or without calcination.

### <Experimental Example 3: Measurement of Ammonia Decomposition Reaction According to Nitriding Conditions of Catalysts>

In order to measure the effect of nitriding conditions on the ammonia decomposition reaction, the catalysts prepared in Preparation Examples were used as catalysts for an ammonia decomposition reaction, followed by measuring the ammonia conversion rate in the ammonia decomposition reaction. The results thereof are shown in FIG. 3.

In FIG. 3, FIG. 3(a) is a graph showing ammonia conversion rate measurements at varying ammo decomposition reaction temperatures as a function of nitriding time, and FIG. 3(b) is a graph showing ammonia conversion rate measurements at varying ammo decomposition reaction temperatures as a function of nitriding temperature.

In this case, the ammonia conversion rate in the ammonia decomposition reaction was measured in the same manner as in Experimental Example 1. The results thereof are shown in FIG. 3.

As shown in FIG. 3, the catalysts of Preparation Examples 5, 12, and 13, prepared through nitriding for 2 hours or longer, exhibited superior ammonia decomposition activity compared to the catalysts of Preparation Examples 15 and 14, prepared without performing nitriding or through nitriding for 1 hour, respectively. In terms of nitriding temperature, the catalyst of Preparation Example 5, nitrided at 700°C, exhibited higher ammonia decomposition activity than the catalyst of Preparation Example 16, nitrided at 750°C.

### <Experimental Example 4: Measurement of Ammonia Decomposition Reaction According to Ce and Cs Molar Ratios of Catalysts>

In order to measure the effect of cerium (Ce) and cesium (Cs) molar ratios on the ammonia decomposition reaction, the catalysts prepared while maintaining the content of the cobalt and molybdenum nitrides constant and varying the contents of cerium (Ce) and cesium (Cs) were used as catalysts for an ammonia decomposition reaction, followed by measuring the ammonia conversion rate in the ammonia decomposition reaction in the same manner as in Experimental Example 1. The results thereof are shown in FIGS. 4 and 5.

In FIG. 4, FIG. 4(a) is a graph showing ammonia conversion rates of catalysts prepared by varying the cerium (Ce) content, and FIG. 4(b) is a graph showing ammonia conversion rates of catalysts prepared by varying the cesium (Cs) content. In addition, FIG. 5 is a graph showing ammonia conversion rates of cobalt-molybdenum composite nitride catalysts containing no cerium and/or cesium and cobalt-molybdenum composite nitride catalysts containing cerium and cesium.

As shown in FIG. 4(a), the catalysts prepared in Preparation Examples 5, 18, and 19, even when the cesium content was the same, exhibited higher ammonia conversion rates than the catalysts containing no cerium (Preparation Example 23) or containing 0.01 mol (Preparation Example 17) or 0.50 mol (Preparation Example 20) of cerium. In addition, as shown in FIG. 4(b), the catalysts prepared in Preparation Examples 5, 21, and 22, even when the cerium content was the same, exhibited higher ammonia conversion rates than the catalyst of Preparation Example 24, containing no cesium.

In addition, as shown in FIG. 5, the catalyst of Preparation Example 5 exhibited higher ammonia conversion rates than the catalysts containing no cerium or cesium (Preparation Examples 23 and 24, respectively), or containing neither cerium nor cesium (Preparation Example 1).

### <Experimental Example 5: Measurement of Long-Term Stability of Catalysts>

In order to measure the long-term stability of catalysts according to the inclusion of cerium and/or cesium, the catalysts prepared in Preparation Examples 1, 5, 23, and 24 were used as catalysts for an ammonia decomposition reaction to perform the ammonia decomposition reaction for 100 hours, followed by measuring the long-term stability of the catalysts. The results thereof are shown in FIG. 6.

In FIG. 6, FIG. 6(a) is a graph showing ammonia conversion rate measurements over reaction time, and FIG. 6(b) is a graph showing measurements of ammonia conversion rates (X_{NH3}) changed over reaction time relative to the initial ammonia conversion rate (X⁰_{NH3}). 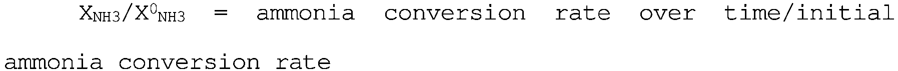 XNH3/X0NH3 = ammonia conversion rate over time/initial ammonia conversion rate

The measurement was performed for 100 hours at atmospheric pressure under the following conditions: an ammonia space velocity of 54,000 mL/gcat./h and an indicator temperature of 550°C. The results thereof are shown in FIG. 6 as ammonia conversion rates.

As shown in FIG. 6, the catalyst prepared in Preparation Example 5 was confirmed to stably maintain catalytic activity for 100 hours at a higher conversion rate than that of the catalysts prepared in Preparation Examples 1, 23, and 24.

### <Experimental Example 6: Measurement According to Catalyst Preparation Methods>

In order to measure the effect of preparation methods on the ammonia decomposition reaction, the catalysts of Preparation Examples 5 and 25 to 28, prepared while maintaining the content of the cobalt and molybdenum nitrides constant and varying the preparation method, were used as catalysts for an ammonia decomposition reaction, followed by measuring the ammonia conversion rate in the ammonia decomposition reaction at varying temperatures in the same manner as in Experimental Example 1. The results thereof are shown in Table 2.

**[Table 2]**

| Classificatio n | Preparation method | Total weight of catalys t obtaine d (g) | Conversion rate (%) | | | |
|---|---|---|---|---|---|---|
| | | | 400° C | 450° C | 500° C | 550° C |
| Preparation Example 5 | Precipitatio n method | 2 | 20.0 | 57.9 | 95.6 | 100 |
| Preparation Example 25 | Precipitatio n method | 10 | 14.7 | 47.0 | 90.1 | 100 |
| Preparation Example 26 | Precipitatio n method | 20 | 13.3 | 43.3 | 85.6 | 98.5 |
| Preparation Example 27 | Solvent-deficient milling | 10 | 13.4 | 44.5 | 87.4 | 100 |
| Preparation Example 28 | Solvent-deficient milling | 20 | 14.8 | 46.8 | 88.9 | 100 |

As shown in Table 2, the catalysts of Preparation Examples 27 and 29, prepared by a solvent-deficient milling method using ball milling, were confirmed to show no degradation in catalyst performance even when the preparation scale was increased, compared to the catalysts of Preparation Examples 5, 25, and 26, prepared by a precipitation method.

Although the present disclosure has been described with reference to the above embodiments, other embodiments may be implemented within the concept and scope of the present disclosure. Therefore, the scope of the present disclosure is defined by the appended claims and equivalents thereof and is not limited by the specific embodiments described herein.

## Claims

1. A catalyst for an ammonia decomposition reaction with improved catalyst stability, the catalyst containing cesium and cerium in a cobalt-molybdenum composite nitride.

2. The catalyst of claim 1, wherein cesium is contained in an amount in a range of 0.001 mol to 0.05 mol with respect to 1 mol of the cobalt-molybdenum composite nitride.

3. The catalyst of claim 1, wherein cerium is contained in an amount in a range of 0.01 mol to 0.4 mol with respect to 1 mol of the cobalt-molybdenum composite nitride.

4. The catalyst of claim 1, wherein the cobalt-molybdenum composite nitride contains cobalt in an amount in a range of 0.5 mol to 1.5 mol with respect to 1 mol of molybdenum.

5. A method of preparing a catalyst for an ammonia decomposition reaction with improved catalyst stability, the method comprising:
(a) mixing a cobalt precursor, a molybdenum precursor, a cesium precursor, and a cerium precursor;
(b) drying the resulting mixture of the (a) mixing; and
(c) nitriding the dried mixture of the (b) drying using a nitrogen source, thereby preparing a cobalt-molybdenum composite nitride containing cesium and cerium.

6. The method of claim 5, wherein the method, after the (a) mixing, comprises aging the resulting mixture of the (a) mixing.

7. The method of claim 6, wherein the aging is performed at a temperature in a range of 25°C to 100°C for 0.1 hours to 10 hours.

8. The method of claim 5, wherein the (b) drying further comprises performing calcination after the drying.

9. The method of claim 8, wherein, in the calcination, primary calcination is performed at a temperature in a range of 100°C to 400°C, followed by secondary calcination at a temperature in a range of 400°C to 700°C.

10. The method of claim 5, wherein solvent-deficient milling is used in the (a) mixing.

11. A method of producing hydrogen from ammonia by bringing a cobalt-molybdenum composite nitride containing cesium and cerium into contact with a gas containing ammonia to cause an ammonia decomposition reaction.

12. The method of claim 11, wherein the cobalt-molybdenum composite nitride containing cesium and cerium is brought into contact with ammonia at a temperature in a range of 300°C to 600°C.
